# FASCICULE DE BREVET EUROPEEN

(11) **EP 1 965 146 B1**
(45) Date de publication et mention de la délivrance du brevet: **09.09.2015**
(21) Numéro de dépôt: 08101476.3
(22) Date de dépôt: 11.02.2008
(51) Int. Cl.: F24H 1/43, F24H 1/46, F24H 9/12, F28D 7/02, F28F 9/02

(54) **Echangeur de chaleur à condensation comprenant deux faisceaux primaires et un faisceau secondaire**
Kondensationswärmetauscher, der zwei Primärwärmetauscher und einen Sekundärwärmetauscher umfasst
Condensation heat exchanger including two primary beams and one secondary beam

(30) Priorité: 28.02.2007 FR 0701436
(43) Date de publication de la demande: 03.09.2008
(73) Titulaire: SERMETA, 29600 Morlaix (FR)
(72) Inventeur: LE MER, Joseph, 29252, PLOUEZOCH (FR); GIANNONI, Rocco, 20121, MILAN (IT)
(74) Mandataire: Regimbeau

(56) Documents cités:
- US-A- 4 388 066

## Description

L'échangeur de chaleur qui fait l'objet de la présente invention est un échangeur à condensation, destiné à équiper une chaudière à gaz ou à fioul, notamment pour des applications industrielles ou domestiques, par exemple en vue d'alimenter un circuit de chauffage central et/ou de fournir de l'eau à usage sanitaire.

Il s'agit, plus précisément, d'un triple échangeur, constitué de deux échangeurs principaux, chacun directement exposé aux gaz chauds générés par un brûleur à gaz ou à fioul, et d'un échangeur secondaire, qui est exposé aux gaz, de température nettement plus faible, qui sont issus de l'un au moins de ces échangeurs principaux, voire des deux à la fois.

L'eau, ou tout autre fluide à réchauffer, circule en tout ou partie dans cet échangeur à contre courant des fumées, c'est-à-dire en passant d'abord dans l'échangeur secondaire, où il subit un préchauffage, puis dans un échangeur primaire, où il subit un chauffage proprement dit.

A titre indicatif, les gaz brûlés directement issus du brûleur se trouvent à une température de l'ordre de 1000°C.

Après avoir traversé un échangeur principal, leur température est généralement comprise entre 100 et 180°C.

Ces gaz chauds contiennent une certaine quantité d'eau sous forme de vapeurs qui sont susceptibles de se condenser lorsqu'elles viennent lécher la paroi de l'échangeur secondaire, dès lors que celle-ci se trouve en dessous de la température de rosée, de l'ordre de 60°C.

Cette condensation a pour effet de fournir des calories supplémentaires à l'eau circulant dans l'échangeur secondaire, ces calories supplémentaires correspondant à la chaleur latente de vaporisation.

Un échangeur double de ce type, qui est décrit par exemple dans le document EP 0 078 207, permet d'améliorer sensiblement le rendement de l'appareil.

Par ailleurs, le document US-A-4 388 066 décrit un échangeur de chaleur comprenant deux faisceaux primaires, munis de brûleurs et un faisceau secondaire, mais ne décrit pas de cloison partageant l'enveloppe extérieure au niveau du faisceau secondaire. Un tel échangeur ne peut donc pas fonctionner avec un seul brûleur ou avec deux brûleurs mais fonctionnant à des puissances différentes, et ce, dans des conditions optimales de rendement et de sécurité.

Dans le document WO 94/16272 est décrit un élément échangeur de chaleur qui consiste en un tube en matériau thermiquement bon conducteur, dans lequel un fluide caloporteur, par exemple de l'eau à réchauffer, est destiné à circuler.

Ce tube est enroulé en hélice et possède une section droite aplatie, globalement ovale, dont le grand axe est sensiblement perpendiculaire à l'axe de l'hélice, et chaque spire du tube possède des faces planes qui sont écartées des faces de la spire adjacente d'un interstice de largeur constante, sensiblement plus faible que l'épaisseur de ladite section droite, l'espacement entre deux spires voisines étant en outre calibré au moyen d'entretoises, celles-ci pouvant consister par exemple en des bossages formés dans la paroi du tube.

Ce document décrit également des échangeurs de chaleur comportant plusieurs éléments tels que ci-dessus, qui sont agencés de différentes manières dans les divers modes de réalisation exposés.

Un élément échangeur ainsi conçu assure un échange de chaleur très important entre les gaz chauds qui lèchent l'élément tubulaire et le fluide à réchauffer qui circule à l'intérieur de celui-ci.

En effet, lors de son passage à travers l'interstice entre les spires, le flux de gaz chauds est en contact avec une surface relativement étendue de la paroi de l'élément d'échangeur.

Selon le mode de réalisation illustré à la figure 22 du document WO 94/16272 précité, auquel on pourra se reporter au besoin, l'appareil comporte deux faisceaux parallèles de tubes, l'un primaire 1, l'autre secondaire 1'.

Ces deux faisceaux sont disposés à proximité l'un de l'autre, avec leurs axes parallèles, et sont montés fixement à l'intérieur d'une enveloppe 8 (désignée « corps » dans le document).

Les gaz chauds sont fournis par un appareil extérieur 9 et pénètrent, via un conduit 90 et une manchette 80 dans la partie centrale de l'échangeur principal 1 (flèches **J**₀). Les gaz chauds traversent ce dernier radialement, de l'intérieur vers l'extérieur (flèches **J**₁) puis traversent l'échangeur secondaire, toujours radialement, mais cette fois de l'extérieur vers l'intérieur (flèches **J**₂).

Enfin, les gaz refroidis quittent ce double échangeur par une manchette 81 (flèches **J**₃).

Un perfectionnement de cet appareil, destiné notamment à en améliorer le rendement et la compacité, a fait l'objet du WO 2004/016995, auquel on pourra également se reporter au besoin. Il a découlé de la constatation faite par l'inventeur que l'énergie à récupérer dans l'échangeur secondaire est toujours plus faible que celle qui est captée par l'échangeur primaire.

Ledit perfectionnement, qui, selon le demandeur, constitue l'état de la technique le plus proche de la présente invention, a trait à un échangeur de chaleur à condensation associé à un brûleur à gaz ou à fioul qui est composé de deux faisceaux disposés à proximité l'un de l'autre et montés fixement à l'intérieur d'une enveloppe imperméable aux gaz, ces deux faisceaux communiquant l'un avec l'autre par l'intermédiaire d'un collecteur dit « de transfert », des moyens étant prévus pour faire circuler un fluide à réchauffer, en particulier de l'eau froide, tout d'abord à l'intérieur de(s) tube(s) constitutif(s) dudit faisceau secondaire, puis - via ledit collecteur de transfert - à l'intérieur de(s) tube(s) constitutif(s) dudit faisceau primaire, ladite enveloppe entourant les deux faisceaux de tubes, tout en étant faiblement espacée de chacun d'eux, cette enveloppe présentant une manchette d'évacuation des gaz brûlés qui est positionnée au voisinage dudit faisceau secondaire, cet échangeur étant ainsi agencé que les gaz chauds générés par le brûleur traversent radialement, ou approximativement radialement, en passant à travers les interstices séparant leurs spires, tout d'abord ledit faisceau primaire, puis ledit faisceau secondaire, et sont ensuite évacués hors de l'échangeur à travers ladite manchette.

Il présente, en substance, les caractéristiques suivantes ;
- le brûleur est logé coaxialement à l'intérieur du faisceau primaire ;
- la dimension axiale du faisceau secondaire est sensiblement inférieure à celle du faisceau primaire, de sorte qu'est ménagé un espace disponible en regard d'une portion d'extrémité du faisceau primaire, dans le prolongement du faisceau secondaire de plus petite longueur ;
- cet espace disponible est occupé par une enceinte qui communique avec l'espace intérieur du faisceau secondaire ;
- la manchette est raccordée à la paroi de l'enceinte de manière à communiquer avec elle, et est orientée transversalement par rapport à l'axe du faisceau secondaire, de sorte que son encombrement en direction axiale s'inscrit dans celui de l'enceinte.

Un objectif de l'invention est de proposer un échangeur du genre susmentionné dont la puissance soit encore sensiblement améliorée, sans que son encombrement s'en trouve notablement altéré.

Un autre objectif de la présente invention est de proposer un échangeur disposant d'une fourchette de puissances étendue tout en pouvant fonctionner dans des conditions optimales de rendement et de sécurité en tout point de cette fourchette ; à titre indicatif cette fourchette peut aller de 25 à 500 kW par exemple.

L'échangeur de chaleur à condensation faisant l'objet de la présente invention est donc, conformément aux enseignements du document WO 2004/016995 déjà cité, un échangeur selon la revendication 1.

Grâce à cet agencement, le faisceau secondaire peut récupérer de la chaleur véhiculée par les fumées issues de l'un et/ou de l'autre des deux brûleurs, le fonctionnement de l'appareil n'étant pas perturbé du fait de la présence de la cloison associée à l'échangeur secondaire, cloison qui autorise de fonctionner avec un seul des deux brûleurs, ou avec les deux à la fois, à des puissances et des temps de démarrage/arrêt pouvant être très différents pour chaque brûleur.

Par ailleurs, selon un certain nombre de caractéristiques avantageuses possibles de l'invention :
- les axes des trois faisceaux sont situés dans un même plan et le faisceau secondaire est disposé entre les deux faisceaux primaires ;
- ladite cloison s'étend diamétralement par rapport au faisceau secondaire, perpendiculairement audit plan ;
- ledit plan est vertical ;
- les trois faisceaux sont similaires, de même longueur et de même diamètre ;
- ladite enveloppe comprend une façade plane, dite façade avant, perpendiculaire aux axes des trois faisceaux, à laquelle sont fixés lesdits brûleurs ;
- l'échangeur comporte des moyens de contrôle de l'alimentation de chaque brûleur en combustible ;
- lesdits moyens de contrôle comprennent un clapet de fermeture tel qu'un volet pivotant apte à empêcher ou, au contraire, à autoriser l'alimentation en combustible du brûleur qui lui est associé ;
- ladite enveloppe comprend une façade plane, dite façade arrière, perpendiculaire aux axes des trois faisceaux, qui est traversée par une ouverture du faisceau secondaire et est bordée par ladite manchette ;
- ladite cloison possède, du côté de ladite façade arrière, un bord libre s'insérant légèrement dans ladite ouverture et/ou dans la manchette ;
- lesdits faisceaux sont des enroulements de tube hélicoïdaux ;
- les tubes constitutifs des enroulements hélicoïdaux ont une section aplatie et/ou ovale, dont le grand axe est approximativement perpendiculaire à l'axe de l'enroulement ;
- l'interstice séparant deux spires de l'enroulement a une largeur sensiblement plus faible que la largeur du tube ;
- chaque enroulement tubulaire constituant un faisceau est constitué d'une série de N modules identiques placés bout à bout ;
- l'échangeur est équipé d'un système de transfert du fluide, en particulier d'eau, parcourant l'échangeur, lequel comprend :
   a) sur un côté de l'enveloppe:
      - un premier caisson collecteur subdivisé en deux chambres séparées par une cloison, l'une dite chambre amont, pourvue d'un embout apte à être raccordé à une conduite d'amenée du fluide à chauffer, l'autre dite chambre aval;
      - un second caisson collecteur subdivisé en deux chambres séparées par une cloison, l'une dite chambre amont, l'autre dite chambre aval, pourvue d'un embout apte à être raccordé à une conduite d'évacuation du fluide chauffé ;
      lesdites chambres amont et aval étant reliées l'une à l'autre par une tubulure ;
   b) sur l'autre côté de l'enveloppe :
      - un troisième caisson collecteur formé de deux chambres partiellement séparées par une cloison incomplète, l'une dite chambre amont, l'autre dite chambre aval, ces deux chambres pouvant communiquer l'une avec l'autre par un passage de section limitée situé en bout de cloison ;
      - un quatrième caisson collecteur formé de deux chambres séparées par une cloison incomplète, l'une dite chambre amont, l'autre dite chambre aval, ces deux chambres pouvant communiquer l'une avec l'autre par un passage de section limitée situé en bout de cloison ;
      lesdites chambres amont étant reliées l'une à l'autre par une tubulure;
   et :
   d'une première part, les N modules composant l'enroulement secondaire sont montés en parallèle, avec leur embouchure d'entrée connectée à la chambre amont du premier caisson collecteur et leur embouchure de sortie connectée à la chambre amont du quatrième caisson collecteur ;
   d'une deuxième part, un certain nombre Nb des modules composant l'un des deux enroulements primaires sont montés en parallèle, avec leur embouchure d'entrée connectée à la chambre amont du premier caisson collecteur et leur embouchure de sortie connectée à la chambre amont du quatrième caisson collecteur, tandis que le reste N-Nb des modules composant cet enroulement primaire sont montés en parallèle, avec leur embouchure d'entrée connectée à la chambre aval du quatrième caisson collecteur et leur embouchure de sortie connectée à la chambre aval du premier caisson collecteur ;
   d'une troisième part, un certain nombre Na des modules composant l'autre enroulement primaire sont montés en parallèle, avec leur embouchure d'entrée connectée à la chambre amont dudit second caisson collecteur et leur embouchure de sortie connectée à la chambre amont du troisième caisson collecteur, tandis que le reste N-Na des modules composant cet enroulement primaire sont montés en parallèle, avec leur embouchure d'entrée connectée à la chambre aval du troisième caisson collecteur et leur embouchure de sortie connectée à la chambre aval du deuxième caisson collecteur.

De manière préférentielle :
- lesdits nombres Na et Nb sont égaux ;
- N est un nombre pair et Na + Nb = N/2 ;
- la tubulure qui relie entre elles les chambres amont des premier et deuxième caissons collecteurs et la tubulure qui relie entre elles les chambres amont des troisième et quatrième caissons collecteurs sont munies chacune d'une vanne susceptible d'être fermée ce qui permet d'isoler du circuit l'un des deux échangeurs primaires lorsque seul l'autre échangeur primaire est mis en fonctionnement.

L'invention a également pour objet une chaudière à gaz ou à fuel comprenant un échangeur conforme à l'une des revendications 1 à 19 et qui est pourvue d'une paire de brûleurs équipés chacun d'un moyen de contrôle de son alimentation en combustible.

L'invention se rapporte aussi à une batterie d'au moins deux chaudières de ce genre, qui sont connectées à un même circuit de chauffage comprenant des canalisations d'amenée de l'eau à chauffer et de départ de l'eau chaude.

D'autres caractéristiques et avantages de l'invention apparaîtront de la description et des dessins annexés qui en représentent, à simple titre d'exemples des modes de réalisation possibles.

Sur ces dessins :
- la figure 1 est une vue de face schématique d'un premier mode de réalisation de l'invention, coupé par le plan vertical référencé 1-1 sur la figure 2 ;
- la figure 2 est une vue de côté schématique de l'appareil de la figure 1, coupé par un plan vertical référencé II-II sur la figure 1 ;
- les figures 3 et 4 sont des vues simplifiées en perspective et à plus petite échelle, du même échangeur, ces vues permettant de distinguer notamment, respectivement, ses façades avant et arrière, ainsi que ses caissons collecteurs latéraux ;
- les figures 5 et 6 sont des schémas qui représentent les collecteurs et les connections hydrauliques entre les faisceaux, de chaque côté de l'échangeur ;
- les figures 7 et 8 représentent, en coupe, un dispositif de contrôle d'alimentation d'un brûleur, pourvu d'un volet obturateur pivotant respectivement à l'état fermé et à l'état ouvert ;
- la figure 9 est un détail à plus grande échelle de la zone référencée **Ω** sur la figure 7 ;
- les figures 10 et 11 sont des schémas analogues à ceux des figures 5 et 6, montrant une variante pourvue de vannes d'isolation d'un faisceau primaire ;
- la figure 12 représente schématiquement une batterie de deux chaudières conformes à l'invention ;
- la figure 13 est une vue de côté simplifiée d'une variante possible de l'échangeur;
- les figures 14 à 19 montrent différentes formes de section possibles d'un tube composant un enroulement hélicoïdal constitutif d'un faisceau tubulaire ;
- la figure 20 montre une variante dans laquelle le faisceau cylindrique est formé de tubes parallèles disposés selon les génératrices du cylindre (parallèlement donc à l'axe du faisceau).

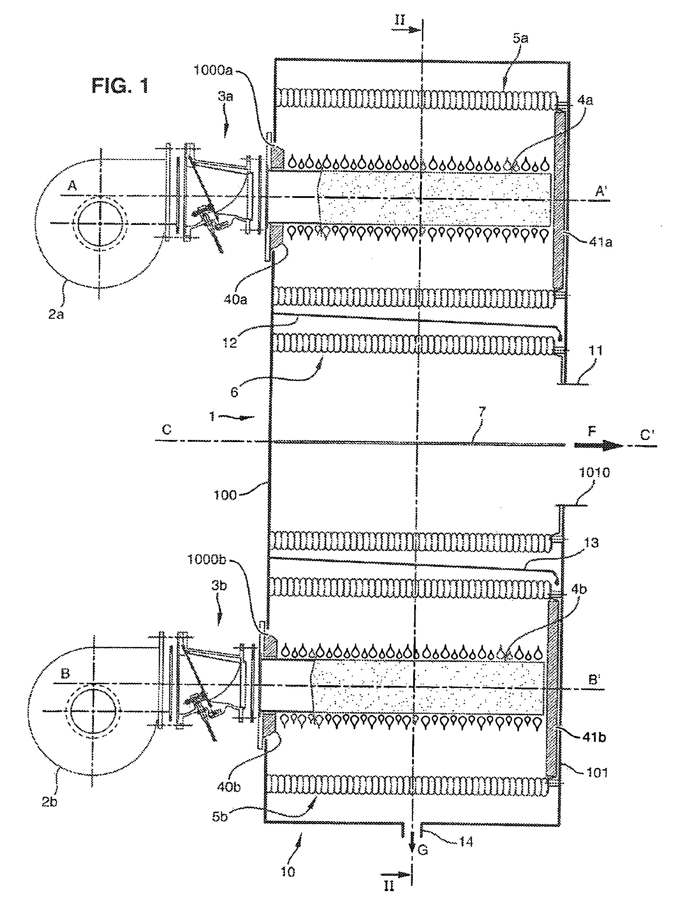

L'appareil illustré sur les figures 1 à 4 comprend un échangeur de chaleur 1 comportant un corps creux à mince paroi, ou enveloppe, référencée 10, par exemple en tôle d'acier inoxydable.

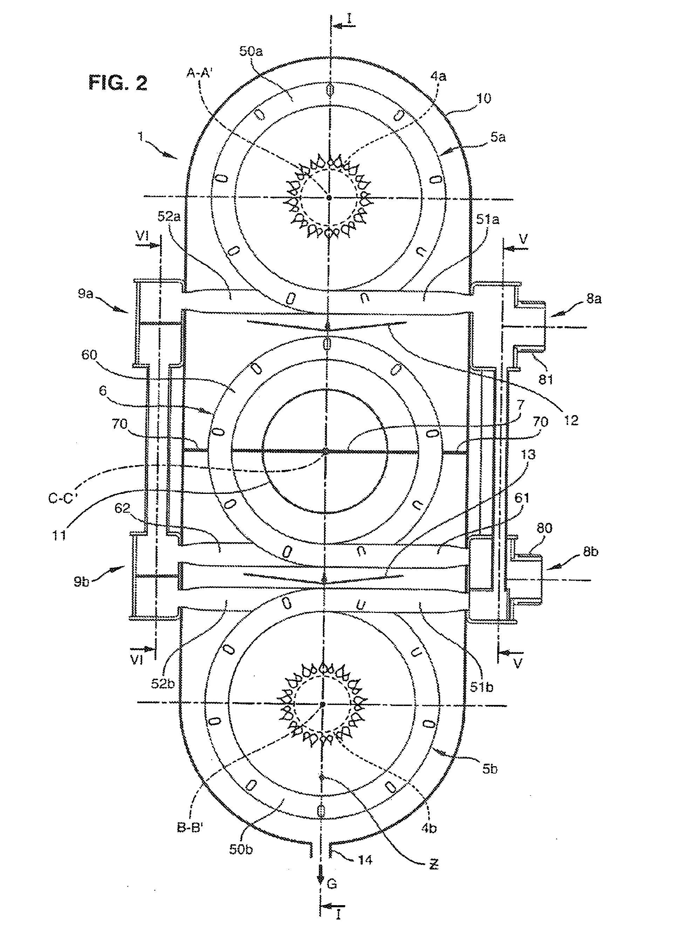

Comme on le voit sur la figure 2, vu de côté, ce corps 10 a une forme ovale dont le contour est formé en parties haute et basse de demi-cercles, lesquels sont raccordés par deux segments rectilignes latéraux.

Comme on le voit sur la figure 1, il possède des façades 100 et 101 qui sont planes, parallèles l'une à l'autre, et perpendiculaires à l'axe des portions semi-cylindriques susmentionnées.

Dans la suite de la présente description, on désignera par « façade avant » la façade 100 qui se trouve sur la gauche de la figure 1 et par « façade arrière » la façade opposée 101 tournée vers la droite.

Ces deux façades sont fixées à la partie centrale tubulaire de l'enveloppe de manière étanche aux gaz, par exemple par soudage.

Comme on le voit sur les figures 1 et 2, le fond de l'enveloppe est pourvu d'une bouche de sortie 14 des condensats, dont l'évacuation est symbolisée par la flèche G.

A l'intérieur de cette enveloppe 1 sont montés côte à côte trois faisceaux cylindriques tubulaires, de configuration et de dimensions similaires, référencés 5a, 6 et 5b.

Dans le mode de réalisation de l'invention décrit sur les figures 1 à 6, les façades 100 et 101 sont verticales, tandis que les axes desdits faisceaux 5a, 6 et 5b, référencés respectivement A-A', C-C' et B-B', sont horizontaux et coplanaires, situés dans un même plan vertical médian, référencé **Z** sur la figure 2.

Le faisceau 6 est positionné entre les faisceaux supérieur 5a et inférieur 5b, à faible distance de ceux-ci.

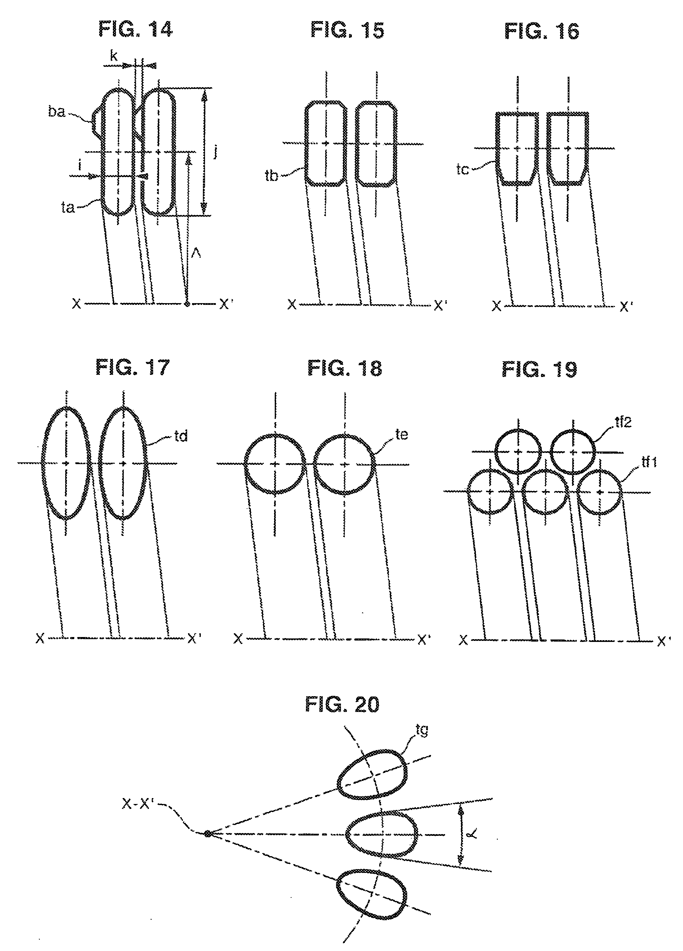

Selon ce mode de réalisation, chaque faisceau est un enroulement hélicoïdal de tubes aplatis, de section ovalisée, du genre décrit dans la demande internationale WO 94/16272 précitée, et représentée sur la figure 14, sur laquelle l'axe de l'hélice est référencé X-X'.

D'après cette figure, on comprend que la dimension radiale j de la section du tube, référencé **ta,** est notablement plus grande que sa largeur i, laquelle est elle-même sensiblement plus grande que la valeur k de l'espace entre deux spires voisines, dont l'écartement est calibré par des bossages **ba.**

A titre indicatif, on a les valeurs suivantes :
j : entre 20 et 50 mm ;
i : entre 6 et 8 mm ;
k : entre 0,7 et 1 mm ;
Rayon moyen d'enroulement A : entre 90 et 130 mm ;
Epaisseur de paroi du tube : entre 0,4 et 1,5 mm ;
Rapport i/k ≥ 3.

Ces tubes ont une paroi en matériau thermiquement bon conducteur ; ils sont par exemple en acier inoxydable hydroformé conformément aux enseignements du WO 94/16272 ou en alliage en aluminium, ou à base d'aluminium moulé ou tréfilé, comme prévu par exemple dans le EP 1 752 718.

Un module composant un faisceau primaire 5a, 5b, comprend une portion de tube centrale principale 50a, 50b enroulée en hélice à quatre spires, dont les parties d'extrémité 51a-52a, respectivement 51b-52b sont rectilignes et s'étendent tangentiellement vers l'extérieur par rapport à l'enveloppe de l'hélice, leur portion d'extrémité libre ayant une section cylindrique.

Les modules composant le faisceau secondaire 6 ont une configuration identique, avec une portion centrale 70 enroulée à quatre spires et des portions d'extrémité droites 61, 62.

Cette configuration, qui n'est évidemment pas obligatoire, correspond à celle du mode de réalisation de module illustré sur les figures 1, 2 et 24 du document WO 94/16272.

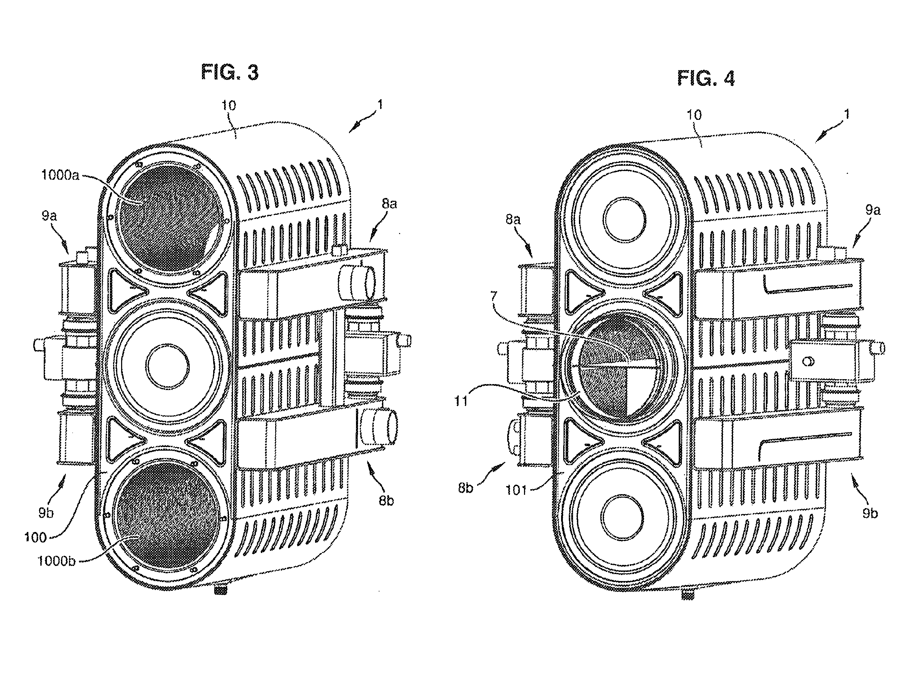

Un module similaire se trouve représenté aux figures 3A et 3B du document WO 2005/108875.

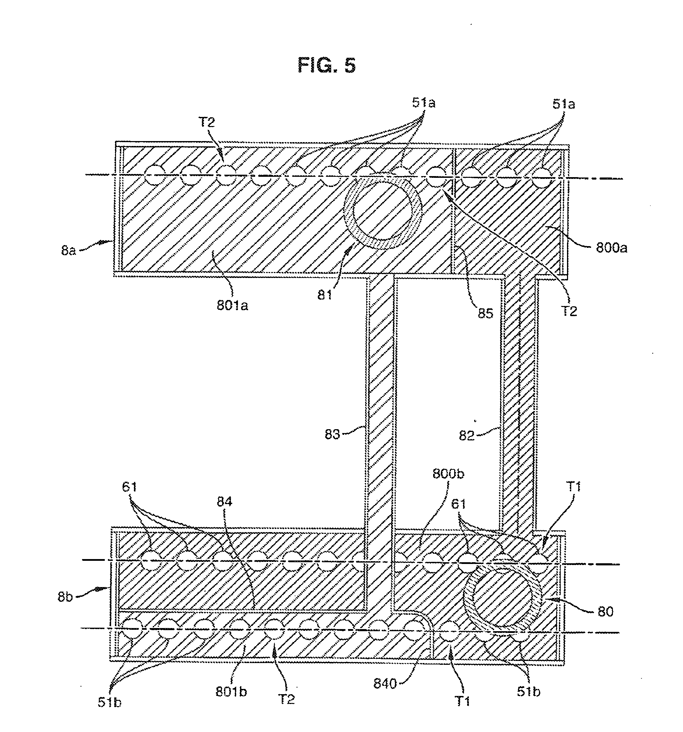

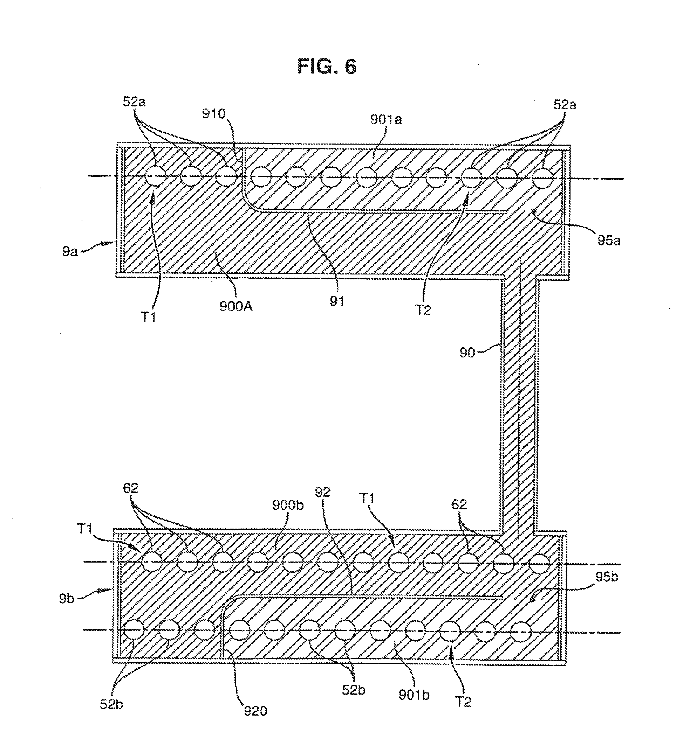

Dans le mode de réalisation illustré, chacun des trois faisceaux est constitué d'un certain nombre de modules tubulaires identiques, par exemple de douze modules (N=12). Ils sont accolés coaxialement bout à bout et branchés en parallèle, comme on le verra ultérieurement en référence notamment aux figures 5 et 6.

Chaque faisceau est ainsi un enroulement tubulaire de quarante huit spires (12 x 4), de forme cylindrique ayant par exemple une longueur de l'ordre de 400 mm et un diamètre externe de l'ordre de 250 mm.

Les faisceaux supérieur 5a et inférieur 5b sont des éléments d'échangeur primaires, pourvus chacun intérieurement d'un brûleur 4a, respectivement 4b.

Il s'agit de brûleurs cylindriques de type connu, à paroi perforée ou poreuse, de diamètre notablement inférieur à celui de l'enroulement, centrés sur l'axe A-A', respectivement C-C', et s'étendant sensiblement sur toute la longueur de l'enroulement, c'est-à-dire depuis la façade avant 100 jusqu'à la façade arrière 101. Les trous des brûleurs, dirigés radialement, permettant le passage d'un mélange gazeux combustible, par exemple air + butane ou air + fioul, la surface extérieure de la paroi tubulaire constituant la surface de combustion.

Leur diamètre est par exemple de l'ordre de 70 mm.

Les brûleurs 4a, 4b sont fixés, par exemple par boulonnage, contre la façade avant 100 et traversent des ouvertures ad hoc 1000a, respectivement 1000b, ménagées dans cette dernière ; ces ouvertures sont bordées d'une pièce annulaire 40a, 40b en matériau résistant à la chaleur et isolant thermique ; à l'extrémité opposée, un disque 41a, 41b en matériau similaire, dont le diamètre correspond à celui du faisceau, est fixé contre la face interne de la façade arrière 101. Ces éléments ont pour fonction de protéger à ce niveau la paroi de l'enveloppe 10 de la très forte chaleur générée par la combustion.

Chaque brûleur est équipé d'un dispositif d'allumage approprié, par exemple d'une électrode, située tout près de la surface de combustion. Il s'agit là d'un dispositif connu qui n'a pas été représenté sur les dessins afin de ne pas les alourdir inutilement.

Des organes de montage idoines permettent d'immobiliser correctement chaque brûleur, ainsi que le faisceau primaire qui l'entoure, à l'intérieur de l'enveloppe 10.

Dans le mode de réalisation illustré, le mélange gazeux combustible est amené à chaque brûleur 4a, 4b au moyen d'un ventilateur 2a, 2b de type connu, à débit variable, qui fait également partie de l'appareil.

Toutefois, on ne sortirait pas du cadre de l'invention en substituant à ce ventilateur une manchette d'amenée du mélange, par des moyens séparés (de type connu).

L'arrivée du mélange combustible - butane et air par exemple -, à chaque brûleur se fait par l'intermédiaire d'un moyen de contrôle 3a, respectivement 3b.

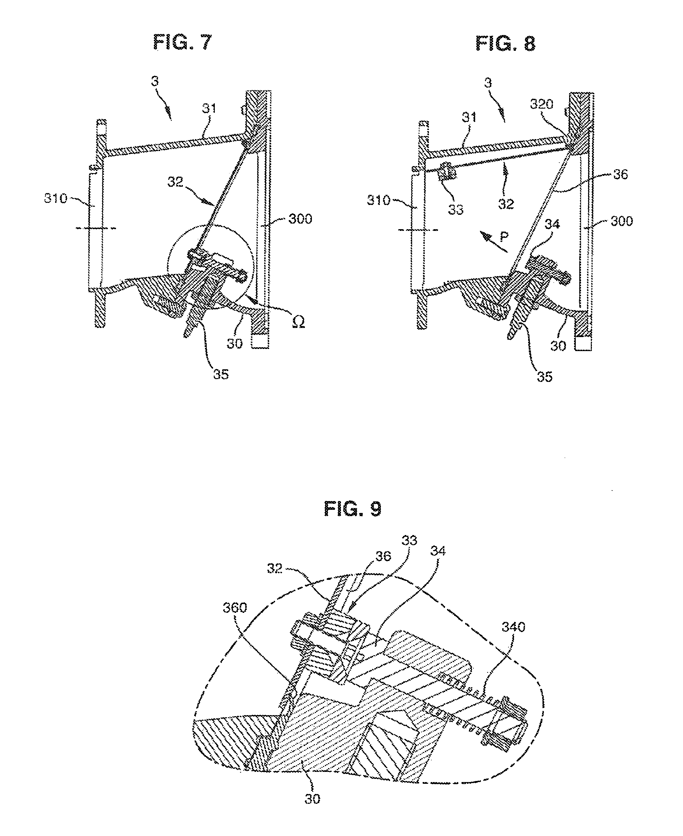

Comme on le voit sur les figures 7 à 9, ce moyen - qui porte la référence 3 - comprend un corps de base 30 présentant une ouverture d'entrée 300, sur lequel est fixé un conduit 31 présentant une ouverture de sortie 310. A l'entrée de ce conduit est disposé un clapet de fermeture 32 sous forme d'un volet pivotant, d'axe de rotation 320, apte à empêcher ou, au contraire, à autoriser l'alimentation en combustible du brûleur 4 qui lui est associé.

A la sortie de chaque ventilateur 2 est prévue une platine de montage permettant sa fixation au corps 30.

Le conduit 31 est fixé, également par l'intermédiaire d'une platine de montage contre la façade 100, dans l'alignement de l'espace tubulaire interne du brûleur 4.

Cet agencement permet un démontage facile des brûleurs, notamment en vue de son nettoyage, pour la maintenance et l'entretien des échangeurs.

Sur la figure 8, la flèche P symbolise l'ouverture du volet 32 dont le pivotement vers le haut découvre une fenêtre 36 de passage.

Le passage du mélange se fait de la droite vers la gauche, en référence à la figure 8, lorsque le clapet est ouvert.

A la base du volet 32 est monté un aimant 33 apte à coopérer, en position de fermeture, avec un aimant 34 de polarité opposée (ou un élément en matière ferromagnétique) monté dans le corps fixe 30. L'aimant 34 possède une tige sollicitée par un ressort de rappel 340 de manière à prendre normalement appui contre le corps 30 (voir figure 9).

Lorsque le volet est fermé, il obture de manière étanche l'ouverture 36, grâce l'attraction mutuelle des deux aimants 33-34, qui viennent en contact, et à la présence d'une lèvre d'étanchéité périphérique souple 360.

Dans le support 30, au voisinage de l'aimant 34, est disposé un capteur de champ électromagnétique, de type connu, apte à détecter si les aimants sont ou non en contact mutuel et ainsi, corrélativement, si le clapet est ouvert ou fermé. Par suite de la présence du ressort 340, l'aimant 34 est mobile sur une certaine course et peut accompagner légèrement l'aimant 33 dans le sens de l'ouverture du clapet, avant que les deux aimants ne se séparent. Grâce à cet agencement, on évite le risque d'une détection erronée d'ouverture du volet 32 par le capteur 35.

L'ouverture du volet se fait automatiquement sous la pression du fluide distribué par le ventilateur 2. Les aimants sont calibrés pour que l'ouverture se produise au-delà d'une certaine pression, et le degré d'ouverture du volet (qui tend naturellement à se refermer sous l'effet de la gravitation) est proportionnel au débit du mélange fourni par le ventilateur et traversant l'ouverture 300.

Lorsque le ventilateur s'arrête, le volet se ferme automatiquement et occupe une position d'obturation sûre, grâce à la coopération des deux aimants. Le clapet a par conséquent une fonction anti-retour, qui empêche tout refoulement de gaz en sens contraire (vers le ventilateur).

Les capteurs 35 (associés chacun à un brûleur) sont connectés à une unité de contrôle électronique permettant de gérer et de contrôler le fonctionnement de l'appareil, en tenant compte de consignes d'utilisation et de certains paramètres, tels que notamment la température et le débit qui sont mesurés en certains points du circuit de chauffage central. Ce circuit commande la mise en marche et l'arrêt de chaque ventilateur et des brûleurs associés, et la puissance mise en oeuvre par chaque brûleur, qui est fonction du débit du (ou des) ventilateur(s).

Ces capteurs permettent de détecter d'éventuelles anomalies de fonctionnement, en particulier l'ouverture inopinée d'un volet alors que le brûleur associé n'est pas en service.

Dans ce cas, le circuit de commande peut émettre un signal d'alarme ad hoc et/ou arrêter la chaudière.

Le faisceau central 6 est similaire aux faisceaux primaires haut et bas 5a, 5b; il s'agit d'un faisceau secondaire, dépourvu de brûleur central.

Les portions d'extrémité rectilignes 51a et 52a des modules du faisceau primaire supérieur 5a traversent latéralement la paroi de l'enveloppe 10 et se raccordent de chaque côté de cette enveloppe à un collecteur 8a, respectivement 9a.

Les portions d'extrémité rectilignes 61 et 51b, d'une part, et 62 et 52b, d'autre part, des modules du faisceau central 6 et du faisceau primaire inférieur 5b traversent latéralement la paroi de l'enveloppe 10 et se raccordent de chaque côté de cette enveloppe à un même collecteur 8b, respectivement 9b.

En dessous des faisceaux 5a et 6 sont disposées des plaques 12, 13 en forme approximative de gouttières de section en V (d'angle très ouvert) légèrement inclinées par rapport à l'horizontale, courant de la façade avant 100 jusqu'à proximité de la façade arrière 101 de l'enveloppe 10.

Leur fonction est de recueillir et de canaliser les condensats se formant sur les tubes en empêchant qu'ils ne tombent sur les faisceaux inférieurs ; ces condensats sont canalisés à l'extrémité arrière des faisceaux pour s'écouler vers le fond de l'enveloppe et s'évacuer par la sortie 14.

Dans la paroi arrière 101 de l'enveloppe est ménagée une ouverture circulaire 1010, d'axe C-C', de diamètre inférieur au diamètre intérieur du faisceau 6, pourvu d'une collerette 11 constituant la manchette d'échappement des fumées. Cette manchette peut être raccordée à un conduit de cheminée.

L'espace intérieur de l'enveloppe 10 est subdivisé par une cloison horizontale plane passant par l'axe C-C', présentant une partie principale centrale 7 qui se trouve à l'intérieur du faisceau 6 et deux parties latérales 70 qui se trouvent à l'extérieur de celui-ci. La partie 7 a une largeur sensiblement égale au diamètre intérieur de l'enroulement si bien qu'elle s'inscrit diamétralement, sans jeu notable, à l'intérieur du faisceau 6.

Les parties latérales 70 sont intercalées entre l'enroulement et une paroi latérale de l'enveloppe, également sans jeu.

La cloison 7-70, par exemple en acier inoxydable, s'étend sur toute la longueur du faisceau 6, entre les parois 100 et 101. La partie 7 présente un bord arrière à profil adapté pour pénétrer légèrement dans la manchette 11.

Des moyens de liaison appropriés, non représentés, permettent d'assurer l'immobilisation de la cloison 7-70 dans la position indiquée.

En référence aux schémas des figures 5 et 6, nous allons maintenant expliquer de quelle manière les différents modules des faisceaux 5a, 6 et 5b sont connectés aux collecteurs 8a-8b et 9a-9b, et comment ces derniers sont agencés. Chaque élément d'enroulement tubulaire (ou module) est retenu à l'intérieur de l'enveloppe du fait de l'engagement de ses parties d'embouchure cylindrique dans des trous circulaires appropriés ménagés dans les parois latérales verticales planes de l'enveloppe, et pénètrent à l'intérieur des collecteurs.

Des moyens d'étanchéité appropriés sont prévus à ce niveau.

La façade avant 100 de l'appareil est tournée vers la gauche sur la figure 5 et vers la droite sur la figure 6.

Les collecteurs latéraux supérieurs 8a, 8b sont des caissons ayant approximativement la forme d'une boîte rectangulaire, à laquelle se raccordent respectivement les portions d'extrémité 51a, 52a des modules qui constituent le faisceau primaire 5a.

En référence à la figure 5, on voit que le caisson 8a - ou « deuxième » caisson - est subdivisé intérieurement, de façon étanche, par une cloison verticale 85. Celle-ci est positionnée de telle façon que trois des modules se raccordent au caisson 8a du côté arrière de cette cloison, dans une chambre 800a dite « amont » (Na = 3).

Les neuf (N - Na = 9) modules restants débouchent en avant de la cloison 85, dans une chambre 801a, dite « aval ».

Cette dernière est pourvue d'un embout 81 de raccordement à un conduit de départ de l'eau chaude.

En référence à la figure 6, on voit que le caisson 9a - ou « troisième » caisson - est subdivisé intérieurement, mais incomplètement, par une cloison horizontale 91 dont le bord arrière est arrondi et forme une portion 910 qui remonte pour rejoindre la paroi supérieure horizontale de ce caisson.

Les trois modules précités, qui (de l'autre côté) se raccordent au caisson 8a du côté arrière de la cloison 85, débouchent à l'arrière de la portion 910, dans une chambre 900a dite « amont », les neuf autres modules débouchant en avant de cette portion, au-dessus de la cloison 91, dans une chambre 901a dite « aval ».

Les deux chambres 900a et 901 a communiquent par une zone de passage 95a située en vis-à-vis du bord libre avant de la cloison 91.

Les collecteurs latéraux inférieurs 8b, 9b sont des caissons ayant également approximativement la forme d'une boîte rectangulaire, à laquelle se raccordent, à la fois, respectivement les portions d'extrémité 61,62 des modules qui constituent le faisceau secondaire 6 et, et 51b, 52b des modules qui constituent le faisceau primaire 5b.

En référence à la figure 5, on voit que le caisson 8b - ou « premier » caisson - est subdivisé intérieurement par une cloison horizontale 84 dont le bord arrière est arrondi et forme une portion 840 qui redescend pour rejoindre la paroi inférieure horizontale de ce caisson.

Elle subdivise l'espace intérieur du caisson 8b en une chambre principale, dite « amont », 800b et une chambre 801b plus petite, dite « aval ».

Dans la chambre 800b, débouchent l'ensemble des N (douze) modules composant le faisceau secondaire 6 ainsi que les trois modules arrière du faisceau primaire 5b (Nb = 3). Les neuf autres modules (N - Nb) de ce dernier débouchent dans l'autre chambre 801b.

La chambre amont 800b est pourvue d'un embout 80 de raccordement à un conduit d'arrivée de l'eau à chauffer.

En référence à la figure 6, on voit que le caisson 9b - ou « quatrième » caisson - est subdivisé intérieurement, mais incomplètement, par une cloison horizontale 92 dont le bord arrière est arrondi et forme une portion 920 qui redescend pour rejoindre la paroi inférieure horizontale de ce caisson.

Les trois modules précités du faisceau primaire 5b, qui (de l'autre côté) se raccordent à la chambre 800b, débouchent à l'arrière de la portion 920, dans une chambre 900b dite « amont », les neuf autres modules débouchant en avant de cette portion, en dessous de la cloison 92, dans une chambre 901b dite « aval ».

Les douze modules du faisceau secondaire 6 débouchent dans la chambre amont 900b.

Les deux chambres 900b et 901b communiquent par une zone de passage 95b située en vis-à-vis du bord libre avant de la cloison 92.

A l'observation de la figure 6, on remarque que la configuration du cloisonnement des chambres 9a et 9b est symétrique par rapport à un plan horizontal.

Les chambres amont 800b et 800a des premier et deuxième caissons sont reliées par une tubulure verticale 82. De même, leurs chambres aval 801 a et 801b sont reliées par une tubulure verticale 83.

De l'autre côté, les chambres amont 900a et 900b des troisième et quatrième caissons sont reliées par une tubulure verticale 90. Celle-ci débouche à ses extrémités haute et basse à l'avant des caissons, sensiblement en regard des zones de passage 95a et 95b.

Le fonctionnement de cet appareil va maintenant être expliqué en référence aux figures 1 à 9.

L'appareil est par exemple une chaudière collective connectée à un circuit d'eau du chauffage central équipant un immeuble.

L'eau froide arrive au premier caisson collecteur 8b et pénètre dans la chambre amont 800b de celui-ci, via le raccord tubulaire 80.

On supposera que les deux brûleurs 4a, 4b sont en marche.

L'eau froide irrigue tout d'abord, dans une première passe, d'une part les douze modules du faisceau secondaire 6 en y pénétrant par leur portion d'extrémité 61, d'autre part les trois modules arrière du faisceau primaire inférieur 5b en y pénétrant par leur portion d'extrémité 51b, ainsi que les trois modules arrière de faisceau primaire supérieur 5a en y pénétrant par leur portion d'extrémité 51a, via la tubulure 82 et la chambre amont 800a du deuxième caisson 8a.

Ce mode d'irrigation se comprend à l'observation de la figure 5.

Après avoir parcouru chaque module, l'eau qui -comme on le verra plus loin-, a été partiellement réchauffée, ressort de l'autre côté de l'appareil dans les caissons 9a et 9b.

Plus précisément, elle ressort des trois modules arrière du faisceau primaire supérieur 5a par leur portion d'extrémité 52a à l'intérieur de la chambre amont 900a du troisième caisson 9a.

Dans le quatrième caisson 9b, elle ressort à l'intérieur de la chambre amont 900b, à la fois hors des trois modules arrière du faisceau primaire inférieur 5a par leur portion d'extrémité 52b, et hors de l'ensemble des modules composant le faisceau central secondaire 6 par leur portion d'extrémité 62.

Au niveau du caisson supérieur 9a, l'eau qui est sortie des portions de tube 52a dans la chambre amont 900a contourne la cloison 91 et pénètre par le passage 95a dans la chambre aval 901a.

Au niveau du caisson inférieur 9b, l'eau qui est sortie des portions de tube 52b et 62 dans la chambre amont 900b se scinde en deux flux, dont l'un contourne la cloison 92 et pénètre par le passage 95b dans la chambre aval 901b, tandis que l'autre remonte dans la tubulure 90 pour rejoindre également la chambre aval 901a du caisson supérieur via le passage 95a.

Cette scission se fait de façon naturelle sous l'effet de la répartition des pressions dans l'enceinte constituée par les deux caissons 9a - 9b et la tubulure 90 qui les relie. Elle s'explique par le fait que les deux chambres aval 901a et 901b possèdent le même nombre de tubes d'entrée 52a, respectivement 52b (à savoir neuf tubes à irriguer).

La chambre 901 draine donc, en plus du débit fourni par les trois tubes supérieurs 52a, un débit correspondant à six autres tubes, lesquels ne peuvent être que des tubes du caisson inférieur 62 et/ou 52b. Les neuf autres tubes 62 et/ou 52b du caisson inférieur approvisionnent les neuf tubes 52b restants situés dans la chambre aval 901b.

Cet agencement permet donc d'équilibrer les débits en réduisant les pertes de charge.

Ce mode d'irrigation et de cheminement du liquide se comprend à l'observation de la figure 6.

A leur tour les neuf modules avant des deux faisceaux primaires 5a et 5b sont donc parcourus par l'eau qui, comme on le verra plus loin, a été auparavant préchauffée.

Elle en ressort chaude, de l'autre côté, par les portions 51 a dans la chambre aval 801a du caisson supérieur 8a et, par les portions 51b dans la chambre aval 801b du caisson inférieur 8b.

L'eau chaude ressort de l'appareil par l'embout de sortie 81, directement en ce qui concerne celle de la chambre 801 a, et via la tubulure 83 en ce qui concerne celle de la chambre 801b.

Sur les figures 5 et 6, les tubes référencés T1 correspondent à la première passe de préchauffage, tandis que ceux référencés T2 correspondent à la seconde passe, de chauffage proprement dit.

On observera que dans le but de réduire et d'équilibrer au mieux les pertes de charges au sein des différents caissons collecteurs, le nombre et la disposition des tubes ainsi que la configuration des cloisons sont choisis de façon à former sensiblement un réseau dit « en boucle de Tickelmann ».

Un tel réseau, qui permet un écoulement optimal, est ainsi conçu que lorsqu'un point **A** situé dans un conduit amont, de section de passage **S**, est relié à un point **B** situé dans un conduit aval de même section de passage **S**, par l'intermédiaire de n conduits élémentaires branchés en parallèles, ces conduits élémentaires ont tous la même section de passage **s** = **S/n** et que les différents trajets parcourus ont la même longueur et rencontrent les mêmes « accidents » (même nombre de coudes à angle droit par exemple).

Nous allons maintenant expliquer comment s'opère le chauffage en deux phases de l'eau parcourant l'échangeur.

Les ventilateurs 2a et 2b ayant été mis en marche, il amènent un mélange gazeux combustible à l'intérieur de chaque brûleur tubulaire 4a, 4b, ceci via les clapets 3a, 3b qui s'ouvrent automatiquement, puis demeurent ouverts, sous l'effet de la pression du mélange. Ce mélange ressort de la paroi des brûleurs par les petits orifices qui en traversent la paroi. Les brûleurs étant allumés, il se produit une combustion qui génère des flammes sur toute leur surface (voir figures 1 et 2).

Dans le même temps, l'eau à réchauffer a été mise en circulation, ceci au moyen d'une pompe équipant le circuit.

L'eau froide à réchauffer, comme expliqué plus haut, circule tout d'abord, en parallèle, dans l'ensemble des modules composant le faisceau secondaire 6 ainsi que dans les trois modules arrière des faisceaux primaires 5a et 5b (soit 18 modules au total).

A l'issue de cette première passe, elle circule, toujours en parallèle, dans les neuf modules avant des faisceaux primaires 5a et 5b (soit également 18 modules au total).

Les gaz brûlants générés dans l'espace intérieur de chaque faisceau primaire sont chassés vers l'extérieur du faisceau. Ils traversent radialement les interstices séparant les tubes plats qui le composent, réalisant par échange thermique un chauffage élevé de l'eau qui les parcourt intérieurement.

Au sortir du faisceau primaire, les gaz brûlés sont considérablement refroidis par suite de cet échange thermique. Ils se trouvent néanmoins à une température nettement plus élevée que celle de l'eau (à température ambiante) qui arrive dans l'appareil.

A titre indicatif leur température est de l'ordre de 100 à 150°C.

Les gaz chauds provenant du faisceau primaire inférieur 5b sont canalisés vers le haut, en suivant la paroi interne de l'enveloppe. Ils passent sur les côtés de la plaque 13, et traversent la moitié inférieure du faisceau secondaire 6, qui se trouve sous la cloison 7-70, toujours en passant dans les interstices entre ses spires, mais cette fois de l'extérieur vers l'intérieur.

Au cours de ce passage, il se produit une condensation au moins partielle de la vapeur d'eau présente dans les gaz brûlés, du fait que les parois des tubes du faisceau secondaire - parcourus par de l'eau froide, ou simplement tiédie-se trouvent à une température inférieure au point de rosée des produits de combustion. En plus du transfert normal de calories, par conduction thermique, on observe ici un transfert supplémentaire de calories résultant de la transmission de la chaleur latente de vaporisation liée au phénomène de condensation, qui est un changement de phase exothermique.

Les gaz chauds issus du faisceau primaire supérieur 5a ont une trajectoire similaire, mais descendante. Ils sont canalisés vers le bas, en suivant la paroi interne de l'enveloppe. Ils passent sur les côtés de la plaque 12, et traversent la moitié supérieure du faisceau secondaire 6, se trouvant au-dessus de la cloison 7-70, toujours de l'extérieur vers l'intérieur, en passant dans les interstices inter-spires.

On obtient ainsi un double préchauffage de l'eau qui circule dans le faisceau secondaire avant qu'elle n'atteigne le faisceau primaire.

Une moitié du faisceau secondaire est donc affectée à un faisceau primaire complet, de sorte que la règle exposée au préambule de la présente description, à savoir le fait que l'énergie à récupérer dans l'échangeur secondaire est toujours plus faible que celle qui est captée dans l'échangeur primaire, se trouve ici également respectée.

Les gaz brûlés, notablement refroidis, se retrouvent dans l'espace intérieur à l'échangeur secondaire 6, de chaque côté de la cloison centrale 7, puis s'échappent hors de l'appareil par la manchette d'évacuation 11.

Une partie de l'eau froide arrivant dans l'appareil est également préchauffée, mais à une température nettement plus élevée que celle qui parcourt le faisceau primaire 6. Il s'agit de l'eau circulant dans les trois modules arrière de chaque faisceau primaire 5a, 5b, lesquels sont exposés aux gaz brûlants générés par les brûleurs.

Les neuf modules avant de chaque faisceau primaire 5a, 5b assurent le chauffage définitif.

On peut moduler la puissance générée par cette chaudière dans une gamme très étendue en jouant sur la puissance mise en oeuvre pour chaque brûleur. Pour une même puissance globale développée par les brûleurs, cette puissance peut être différemment réparties sur ces brûleurs. La répartition peut en particulier être différente selon qu'on veut produire une eau à température élevée mais à faible débit, ou une eau à température modérée mais à débit important, ces deux situations pouvant requérir une même puissance.

Ceci permet, par une gestion adaptée de l'unité de commande, de travailler en permanence avec un rendement optimal.

L'appareil fonctionne correctement même si un seul des deux brûleurs est en marche même s'ils sont mis en service à des moments différents, et, a fortiori, même si les puissances mises en oeuvre dans les deux brûleurs sont très différentes.

Ceci est rendu possible par la présence de la cloison 7-70 qui isole l'une de l'autre les deux moitiés du faisceau secondaire. A défaut, il risquerait de se produire une interaction néfaste des pressions de gaz autour du faisceau secondaire, qui pourrait contrarier la bonne marche de chaque brûleur.

La fonction anti-retour des clapets 3a et 3b participe également à ce bon fonctionnement, car il empêche toute perturbation liée au refoulement intempestif de gaz hors d'un brûleur lorsque celui-ci n'est pas en service.

Lorsqu'un seul brûleur est en service, seule la moitié du faisceau secondaire 6 (tournée vers ce brûleur) est naturellement exposée aux gaz chauds.

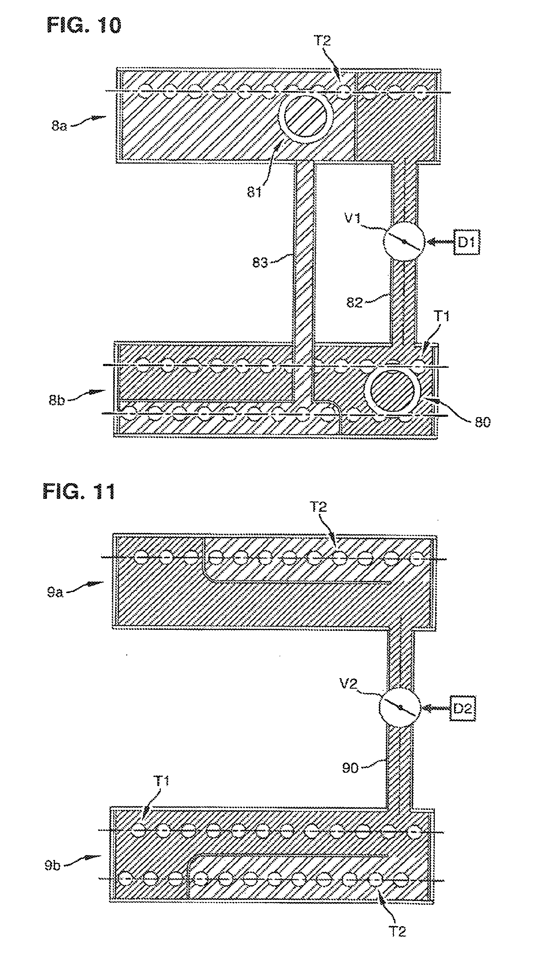

Dans la variante qui est illustrée sur les figures 10 et 11, il est possible d'isoler le faisceau primaire 5a du reste de l'appareil, afin d'éviter que de l'eau ne circule dans ce dernier lorsqu'on met en service uniquement l'autre faisceau primaire 5b.

A cet effet les tubulures 82 et 90 précitées sont équipées chacune d'une vanne **V1,** respectivement **V2,** actionnée par un dispositif de commande **D1,** respectivement **D2**, de manière à pouvoir être ouverte ou fermée. Il s'agit par exemple d'électrovannes.

Lorsque **V1** et **V2** sont ouvertes, l'appareil fonctionne de la façon déjà décrite.

Lorsqu'elles sont fermées, seul le brûleur inférieur 4b est en service, et le circuit d'eau est le suivant.

L'eau qui arrive dans le caisson 8b par l'embout 80 irrigue, dans une première passe, les trois modules arrière du faisceau primaire 5b et l'ensemble des modules du faisceau secondaire 6 (dont la moitié basse seulement est chauffée) puis, dans une seconde passe, les neuf tubes restants du faisceau primaire 5b pour s'échapper finalement via la tubulure 83 par l'embout de sortie 81.

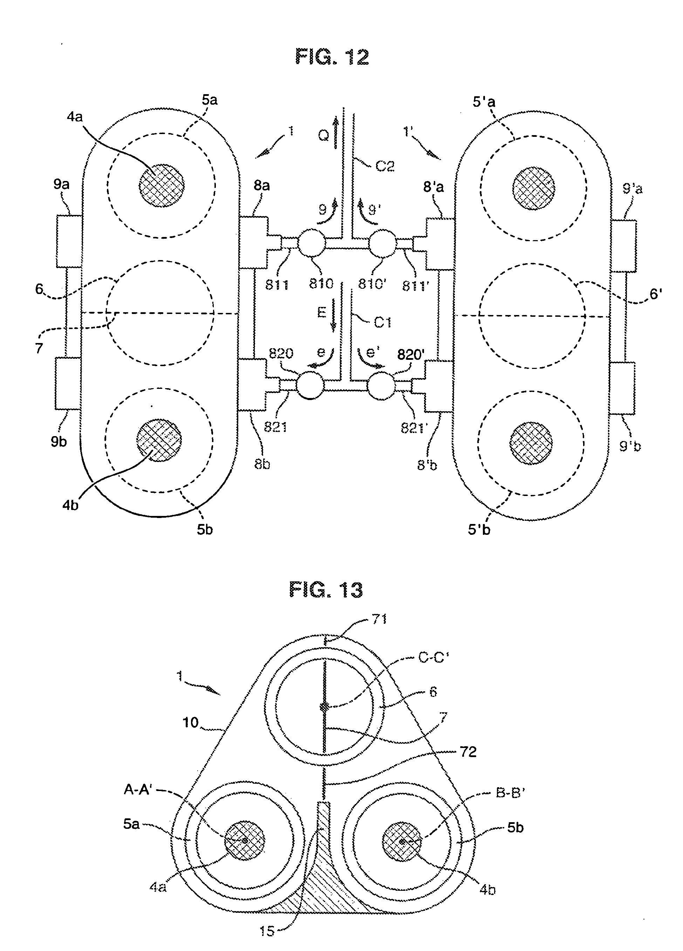

La figure 12 montre schématiquement un montage en batterie de deux chaudières similaires 1,1', conformes à celle qui vient d'être décrite.

Sur l'une d'elles 1', le positionnement latéral des caissons collecteurs, référencés 8'a- 8'b et 9'a-9'b est inversé par rapport aux caissons collecteurs référencés 8a- 8b et 9a-9b de l'autre 1 (inversion gauche/droite).

Les deux appareils sont placés côte à côte de telle façon que leurs paires de caissons collecteurs 8a-8b et 8'a-8'b soient en regard l'une de l'autre.

L'eau à réchauffer arrive par une canalisation **C1** (flèche **E)** qui est branchée par l'intermédiaire d'un té, au moyen de conduits 821, 821', à chacun des embouts d'entrée 8b, respectivement 8'b.

L'eau chaude sort par une canalisation **C2** (flèche **Q)** qui est branchée par l'intermédiaire d'un té, au moyen de conduits 811, 811', à chacun des embouts de sortie 8a, respectivement 8'a.

Le flux d'eau froide **E** entrant se scinde en deux flux secondaires e et e' alimentant chacun un appareil 1, respectivement l'.

Les flux secondaires **q** et **q'** d'eau chaude quittant les appareils se rejoignent formant un flux unique **Q.**

Les conduits 821, 821' d'une part, et 811, 811' d'autre part, sont avantageusement munis d'une vanne 820, 820' et, respectivement, 810, 810' permettant d'isoler l'un ou l'autre des deux appareils si on ne souhaite pas le mettre en service.

Ce montage en batterie permet de doubler la puissance totale de l'installation, tout en conservant une compacité intéressante.

Un tel montage peut s'appliquer, bien sûr, à plus de deux appareils.

Dans le mode de réalisation d'échangeur décrit ci-dessus, en référence notamment aux figures 1 et 2, les axes parallèles A-A', C-C' et B-B' des trois faisceaux sont coplanaires, et leur plan commun **Z** est vertical.

Cette disposition n'est pas obligatoire.

Dans le cas où lesdits axes sont coplanaires, leur plan commun n'est pas forcément vertical. Il pourrait notamment être horizontal ; dans ce cas les faisceaux primaires sont disposés de chaque côté du faisceau secondaire, et c'est la cloison 7-70 qui est verticale.

Mais lesdits axes ne sont pas nécessairement coplanaires.

Ainsi, selon le mode de réalisation illustré sur la figure 13, l'appareil 1 possède trois faisceaux répartis selon un triangle.

Les faisceaux primaires 5a et 5b sont disposés côte à côte, avec leurs axes A-A' et B-B ' dans un plan commun horizontal.

Le faisceau secondaire 6 est positionné au-dessus de la paire de faisceaux primaires de telle façon que son axe C-C' se trouve dans un plan vertical médian passant entre les deux faisceaux primaires.

Entre ces deux faisceaux primaires, à l'intérieur de l'enveloppe 10, est monté un déflecteur 15 à parois latérales en arc de cylindre, aptes à canaliser les gaz brûlants générés par les faisceaux primaires vers le haut, en direction d'une moitié de l'espace occupé par le faisceau secondaire. Conformément à l'invention, cet espace est subdivisé en deux parties par une cloison 7, 71-72 qui est ici verticale.

En référence à la figure 13, seule la moitié gauche du faisceau secondaire est chauffée par les gaz provenant du faisceau primaire situé à gauche ; de la même façon, seule la moitié droite du faisceau secondaire est chauffée par les gaz provenant du faisceau primaire situé à droite.

Les figures 15 à 19 montrent que, pour un faisceau consistant en un enroulement tubulaire hélicoïdal, différentes sections de tube peuvent être utilisées.

Le tube **tb** de la figure 15 a une section essentiellement rectangulaire, à angles arrondis (non vifs). Une configuration de ce genre est prévue par exemple dans le document EP 1 039 246.

Le tube tc de la figure 15 a une section composée d'une partie externe essentiellement rectangulaire, et d'une partie interne, c'est-à-dire tournée vers l'axe X-X' de l'enroulement, essentiellement trapézoïdale. Une configuration de ce genre est prévue par exemple dans le document EP 0 745 813.

Le tube **td** de la figure 17 a une section ovale du genre décrit dans le document EP 1 752 718 ; ce type de tube peut être en outre pourvu d'ailettes, telles que cela est prévu par exemple dans le WO 2004/090434. Les portions latérales de la section peuvent être plus ou moins courbes ou planes (voir aussi le EP 1 281 919).

Le tube te de la figure 18 a une section circulaire.

L'enroulement illustré sur la figure 19 est un enroulement double, comprenant deux tubes concentriques similaires l'un interne **tf₁**, l'autre externe **tf₂** de plus grand diamètre d'enroulement. Une disposition de ce genre est prévue par exemple dans le EP 1703 227. Une configuration à trois enroulements concentriques, également applicable à la présente invention, est décrite dans le EP 1 279 903.

Diverses autres formes de section peuvent naturellement être prévues, telles par exemple que celui en « en goutte d'eau », représenté dans le document DE 100 02 894 A1, ou rectangulaire à bord interne semi-cylindrique, comme dans le document DE 20 2005 011 633 U1.

Avantageusement, quelle que soit la forme de section du tube (ou des tubes) de l'enroulement, la valeur de l'interstice entre spires est relativement faible, calibrée, et avantageusement maintenue constante au moyen d'entretoises appropriées ; ces dernières peuvent former partie intégrantes des tubes (notamment sous forme de bossages ou de dents) et/ou être des organes séparés, du genre « peigne » par exemple.

Les faisceaux ne sont pas forcément des enroulements hélicoïdaux. Ils peuvent par exemple consister en une nappe de tubes rectilignes et parallèles, formant les génératrices d'une enveloppe cylindrique (virtuelle). Ces tubes sont connectés à leurs extrémités à des caissons collecteurs et répartiteurs, et l'eau peut y circuler par un branchement en série et/ou en parallèle.

Comme illustré sur la figure 20, ces tubes **tg** ont avantageusement une section droite possédant des faces latérales radiales planes, qui convergent vers l'axe X-X' du faisceau selon un angle aigu **α**. Une disposition de ce genre fait par exemple l'objet du document FR 2 476 808.

Les trois faisceaux équipant l'échangeur de l'invention n'ont pas nécessairement des formes et/ou des dimensions identiques, ni ne sont obligatoirement de même catégorie , un « panachage » de faisceaux différents est possible.

Un appareil conforme à l'invention est très compact et léger, tout en étant extrêmement performant sur le plan du rendement.

Remarquablement adapté à un usage industriel ou domestique, pour chauffer de l'eau, il peut cependant trouver application dans différents autres domaines, notamment dans l'industrie, pour chauffer divers fluides.

## Revendications

1. Echangeur de chaleur à condensation comportant une paire de faisceaux tubulaires primaires (5a, 5b), chaque faisceau entourant un brûleur (4a, 4b), à gaz ou à fioul, et un faisceau tubulaire secondaire (6) sur lequel s'opère une condensation de la vapeur d'eau contenue dans les gaz brûlés s'échappant des faisceaux primaires, ces trois faisceaux (5a, 5b, 6) étant montés parallèlement côte à côte à l'intérieur d'une enveloppe (10) imperméable aux gaz, et communiquant entre eux, des moyens étant prévus pour faire circuler un fluide à réchauffer, en particulier de l'eau froide, entre les tubes constitutifs du faisceau secondaire (6) et les tubes constitutifs des faisceaux primaires (5a, 5b), ladite enveloppe (10) présentant une manchette d'évacuation (11) des gaz brûlés, **caractérisé par le fait que** l'enveloppe (10) est subdivisée au niveau du faisceau secondaire (6) par une cloison (7-70 ; 7- 71,72) qui s'étend aussi bien à l'intérieur qu'à l'extérieur de ce faisceau (6), l'agencement étant tel qu'un secteur circonférentiel seulement de ce dernier est susceptible d'être léché et traversé par les gaz chauds issus de l'un des deux faisceaux primaires (5a), son secteur restant étant susceptible d'être léché et traversé seulement par les gaz chauds issus de l'autre faisceau primaire (5b).

2. Echangeur selon la revendication 1, **caractérisé par le fait que** les deux faisceaux tubulaires primaires (5a, 5b) et le faisceau tubulaire secondaire (6) sont de forme générale cylindrique et consistent chacun en un tube ou un groupe de tubes, et **par le fait que** les brûleurs (4a, 4b) sont cylindriques et logés coaxialement respectivement à l'intérieur des faisceaux primaires (5a, 5b), cet échangeur étant ainsi agencé que les gaz chauds générés par le brûleur (4a, 4b) traversent radialement, ou approximativement radialement, tout d'abord ledit faisceau primaire (5a, 5b), de l'intérieur vers l'extérieur, puis ledit faisceau secondaire (6), cette fois de l'extérieur vers l'intérieur, pour être ensuite évacués hors de l'échangeur à travers ladite manchette (11).

3. Echangeur selon la revendication 1 ou 2, **caractérisé par le fait que** les axes (A-A'), (B-B') et (C-C') des trois faisceaux (5a), (5b) et (6) sont situés dans un même plan (Z), et que le faisceau secondaire (6) est disposé entre les deux faisceaux primaires (5a, 5b).

4. Echangeur selon la revendication 3, **caractérisé par le fait que** ladite cloison (7, 70) s'étend diamétralement par rapport au faisceau secondaire (6), perpendiculairement audit plan (Z).

5. Echangeur selon l'une quelconque des revendications 3 ou 4, **caractérisé par le fait que** ledit plan (Z) est vertical.

6. Echangeur selon l'une quelconque des revendications précédentes, **caractérisé par le fait que** les trois faisceaux (5a), (5b) et (6) sont similaires, de même longueur et de même diamètre.

7. Echangeur selon l'une quelconque des revendications précédentes, **caractérisé par le fait que** ladite enveloppe (10) comprend une façade plane (100), dite façade avant, perpendiculaire aux axes (A-A'), (B-B') et (C-C') des trois faisceaux (5a), (5b) et (6), à laquelle sont fixés lesdits brûleurs (4a, 4b).

8. Echangeur selon l'une quelconque des revendications précédentes, **caractérisé par le fait qu'**il comporte des moyens de contrôle (3a, 3b) de l'alimentation de chaque brûleur (4a, 4b) en combustible.

9. Echangeur selon la revendication 8, **caractérisé par le fait que** lesdits moyens de contrôle (3a, 3b) comprennent un clapet de fermeture (32) tel qu'un volet pivotant apte à empêcher ou, au contraire, à autoriser l'alimentation en combustible du brûleur (4a, 4b) qui lui est associé.

10. Echangeur selon l'une quelconque des revendications précédentes, **caractérisé par le fait que** ladite enveloppe (10) comprend une façade plane (101), dite façade arrière, perpendiculaire aux axes (A-A'), (B-B') et (C-C') des trois faisceaux (5a), (5b) et (6), qui est traversée par une ouverture (1010) centrée sur l'axe (C-C') du faisceau secondaire et est bordée par ladite manchette (11).

11. Echangeur selon la revendication 10, **caractérisé par le fait que** ladite cloison (7) possède, du côté de ladite dite façade arrière (101), un bord libre s'insérant légèrement dans ladite ouverture (1010) et/ou dans la manchette (11).

12. Echangeur selon l'une quelconque des revendications précédentes, **caractérisé par le fait que** lesdits faisceaux (5a), (5b) et (6) sont des enroulements de tube hélicoïdaux.

13. Echangeur selon la revendication 12, **caractérisé par le fait que** les tubes constitutifs des enroulements hélicoïdaux ont une section aplatie et/ou ovale, dont le grand axe est approximativement perpendiculaire à l'axe de l'enroulement.

14. Echangeur selon la revendication 13, **caractérisé par le fait que** l'interstice séparant deux spires de l'enroulement a une largeur (k) sensiblement plus faible que la largeur (i) du tube.

15. Echangeur selon l'une quelconque des revendications 12 à 14, **caractérisé par le fait que** chaque enroulement tubulaire constituant un faisceau (5a), (5b) et (6) est constitué d'une série de N modules identiques placés bout à bout.

16. Echangeur selon la revendication 15, **caractérisé par le fait qu'**il est équipé d'un système de transfert du fluide, en particulier d'eau, parcourant l'échangeur, lequel comprend :
a) sur un côté de l'enveloppe (10) :
- un premier caisson collecteur (8b) subdivisé en deux chambres séparées par une cloison (84), l'une (800b) - dite chambre amont - pourvue d'un embout (80) apte à être raccordé à une conduite d'amenée du fluide à chauffer, l'autre (801b) -dite chambre aval-;
- un second caisson collecteur (8a) subdivisé en deux chambres séparées par une cloison (85), l'une (800a) -dite chambre amont-, l'autre -dite chambre aval- (801a) pourvue d'un embout (81) apte à être raccordé à une conduite d'évacuation du fluide chauffé ;
lesdites chambres amont (800b, 800a) et aval (801a, 801b) étant reliées l'une à l'autre par une tubulure (82, respectivement 83) ;
b) sur l'autre côté de l'enveloppe (10) :
- un troisième caisson collecteur (9a) formé de deux chambres partiellement séparées par une cloison incomplète (91), l'une (900a) -dite chambre amont-, l'autre (901a) -dite chambre aval-, ces deux chambres pouvant communiquer l'une avec l'autre par un passage de section limitée situé en bout de cloison (91);
- un quatrième caisson collecteur (9b) formé de deux chambres séparées par une cloison incomplète (92), l'une (900b) -dite chambre amont-, l'autre (901b) -dite chambre aval-, ces deux chambres pouvant communiquer l'une avec l'autre par un passage de section limitée situé en bout de cloison (92);
lesdites chambres amont (900a, 900b) étant reliées l'une à l'autre par une tubulure (90) ;
et que :
- d'une première part, les N modules composant l'enroulement secondaire (6) sont montés en parallèle, avec leur embouchure d'entrée connectée à la chambre amont (800b) du premier caisson collecteur (8b) et leur embouchure de sortie connectée à la chambre amont (900b) du quatrième caisson collecteur (9b) ;
- d'une deuxième part, un certain nombre Nb des modules composant l'un (5b) des deux enroulements primaires sont montés en parallèle, avec leur embouchure d'entrée connectée à la chambre amont (800b) du premier caisson collecteur (8b) et leur embouchure de sortie connectée à la chambre amont (900b) du quatrième caisson collecteur (9b), tandis que le reste N-Nb des modules composant cet enroulement primaire (5b) sont montés en parallèle, avec leur embouchure d'entrée connectée à la chambre aval (901 b) du quatrième caisson collecteur (9b) et leur embouchure de sortie connectée à la chambre aval (801b) du premier caisson collecteur (9b);
- d'une troisième part, un certain nombre Na des modules composant l'autre enroulement primaire (5a) sont montés en parallèle, avec leur embouchure d'entrée connectée à la chambre amont (800a) dudit second caisson collecteur (8a) et leur embouchure de sortie connectée à la chambre amont (900a) du troisième caisson collecteur (9a), tandis que le reste N-Na des modules composant cet enroulement primaire (5a) sont montés en parallèle, avec leur embouchure d'entrée connectée à la chambre aval (901a) du troisième caisson collecteur (9a) et leur embouchure de sortie connectée à la chambre aval (801a) du deuxième caisson collecteur (8a).

17. Echangeur selon la revendication 16, **caractérisé par le fait que** lesdits nombres Na et Nb sont égaux.

18. Echangeur selon la revendication 16, **caractérisé par le fait que** N est un nombre pair et que Na + Nb = N/2.

19. Echangeur selon la revendication 16, **caractérisé par le fait que** la tubulure (82) qui relie entre elles les chambres amont (800b - 800a) des premier et deuxième caissons collecteurs (8b, 8a) et la tubulure (90) qui relie entre elles les chambres amont (900a - 900b) des troisième et quatrième caissons collecteurs (9a, 9b) sont munies chacune d'une vanne (V1, respectivement V2) susceptible d'être fermée ce qui permet d'isoler du circuit l'un (5a) des deux échangeurs primaires (5a, 5b) lorsque seul l'autre échangeur primaire (5b) est mis en fonctionnement.

20. Chaudière à gaz ou à fuel comprenant un échangeur (1) conforme à l'une au moins des revendications précédentes qui est pourvue d'une paire de brûleurs (4a, 4b) équipés chacun d'un moyen de contrôle (3a, 3b) de son alimentation en combustible.

21. Batterie de chaudières **caractérisée par le fait qu'**elle comporte au moins deux chaudières conformes à la revendication 20, qui sont connectés à un même circuit de chauffage comprenant des canalisations (C1) d'amenée de l'eau à chauffer et de départ (C2) de l'eau chaude.

## Patentansprüche

1. Kondensationswärmetauscher, der ein Paar primärer Rohrbündel (5a, 5b), wobei jedes Bündel einen Gas- oder Ölbrenner (4a, 4b) umgibt, und ein sekundäres Rohrbündel (6), auf dem die Kondensation des in den verbrannten, aus den primären Bündeln entweichenden Gasen enthaltenen Wasserdampfs erfolgt, aufweist, wobei diese drei Bündel (5a, 5b, 6) parallel nebeneinander in einem gasundurchlässigen Mantel (10) montiert sind und miteinander kommunizieren, wobei Mittel vorgesehen sind, um ein zu erwärmendes Fluid, insbesondere kaltes Wasser, zwischen den das sekundäre Bündel (6) bildenden Rohren und den die primären Bündel (5a, 5b) bildenden Rohren in Zirkulation zu versetzen, wobei der Mantel (10) eine Manschette (11) für die Ableitung der Verbrennungsgase aufweist **dadurch gekennzeichnet, dass** der Mantel (10) im Bereich des sekundären Bündels (6) mittels einer Trennwand (7-70; 7-71, 72) unterteilt ist, die sich sowohl im als auch außerhalb dieses Bündels (6) erstreckt, wobei die Anordnung derart ist, dass nur ein Umfangssektor desselben von den heißen Gasen aus einem der zwei primären Bünden (5a) bestreich- und durchquerbar ist, wobei sein restlicher Sektor nur von den heißen Gasen aus dem anderen primären Bündel (5b) bestreich- und durchquerbar ist.

2. Wärmetauscher nach Anspruch 1, **dadurch gekennzeichnet, dass** die zwei primären Rohrbündel (5a, 5b) und das sekundäre Rohrbündel (6) eine allgemeine zylindrische Form haben und jeweils aus einem Rohr oder einer Gruppe von Rohren bestehen, und dadurch, dass die Brenner (4a, 4b) zylindrisch und koaxial jeweils in den primären Bündeln (5a, 5b) untergebracht sind, wobei dieser Wärmetauscher damit derart ausgebildet ist, dass die von dem Brenner (4a, 4b) erzeugten heißen Gase zunächst das primäre Bündel (5a, 5b) von innen nach außen und dann das sekundäre Bündel (6), dieses Mal von außen nach innen, radial oder ungefähr radial durchqueren, um danach über die Manschette (11) aus dem Wärmetauscher ausgestoßen zu werden.

3. Wärmetauscher nach Anspruch 1 oder 2, **dadurch gekennzeichnet, dass** sich die Achsen (A-A'), (B-B') und (C-C') der drei Bündel (5a), (5b) und (6) in einer selben Ebene (Z) befinden und dass das sekundäre Bündel (6) zwischen den zwei primären Bündeln (5a, 5b) angeordnet ist.

4. Wärmetauscher nach Anspruch 3, **dadurch gekennzeichnet, dass** sich die Trennwand (7, 70) im Verhältnis zum sekundären Bündel (6) diametral, senkrecht zur Ebene (Z) erstreckt.

5. Wärmetauscher nach einem der Ansprüche 3 oder 4, **dadurch gekennzeichnet, dass** die Ebene (Z) vertikal ist.

6. Wärmetauscher nach einem der vorangehenden Ansprüche, **dadurch gekennzeichnet, dass** die drei Bündel (5a), (5b) und (6) ähnlich sind, dieselbe Länge und denselben Durchmesser haben.

7. Wärmetauscher nach einem der vorangehenden Ansprüche, **dadurch gekennzeichnet, dass** der Mantel (10) eine ebene, als Vorderseite bezeichnete Fassade (100) umfasst, die senkrecht zu den Achsen (A-A'), (B-B') und (C-C') der drei Bündel (5a), (5b) und (6) ist, an der die Brenner (4a, 4b) befestigt sind.

8. Wärmetauscher nach einem der vorangehenden Ansprüche, **dadurch gekennzeichnet, dass** er Kontrollmittel (3a, 3b) der Versorgung jedes Brenners (4a, 4b) mit Brennstoff aufweist.

9. Wärmetauscher nach Anspruch 8, **dadurch gekennzeichnet, dass** die Kontrollmittel (3a, 3b) eine Verschlussklappe (32) wie einen schwenkbaren Flügel umfassen, der imstande ist, die Brennstoffversorgung des ihm zugeordneten Brenners (4a, 4b) zu verhindern oder, im Gegenteil, zu gestatten.

10. Wärmetauscher nach einem der vorangehenden Ansprüche, **dadurch gekennzeichnet, dass** der Mantel (10) eine als Rückseite bezeichnete ebene, zu den Achsen (A-A'), (B-B') und (C-C') der drei Bündel (5a), (5b) und (6) senkrechte Fassade (101) umfasst, die von einer auf der Achse (C-C') des sekundären Bündels zentrierten Öffnung (1010) durchquert ist und von der Manschette (11) gesäumt ist.

11. Wärmetauscher nach Anspruch 10, **dadurch gekennzeichnet, dass** die Trennwand (7) auf der Seite der Rückseite (101) einen freien Rand besitzt, der leicht in die Öffnung (1010) und/oder in die Manschette (11) eingreift.

12. Wärmetauscher nach einem der vorangehenden Ansprüche, **dadurch gekennzeichnet, dass** die Bündel (5a), (5b) und (6) schraubenförmige Rohrwicklungen sind.

13. Wärmetauscher nach Anspruch 12, **dadurch gekennzeichnet, dass** die die schraubenförmigen Wicklungen bildenden Rohre einen abgeflachten und/oder ovalen Querschnitt haben, dessen große Achse etwa senkrecht zur Achse der Wicklung verläuft.

14. Wärmetauscher nach Anspruch 13, **dadurch gekennzeichnet, dass** der zwei Windungen trennende Spalt eine Breite (k) hat, die deutlich geringer als die Breite (i) des Rohrs ist.

15. Wärmetauscher nach einem der Ansprüche 12 bis 14, **dadurch gekennzeichnet, dass** jede rohrförmige, ein Bündel (5a), (5b) und (6) bildende Wicklung von einer Reihe N identischer Module gebildet ist, die aneinander platziert sind.

16. Wärmetauscher nach Anspruch 15, **dadurch gekennzeichnet, dass** er mit einem Transfersystem des Fluids, insbesondere Wasser, das den Wärmetauscher durchquert, ausgestattet ist, das umfasst:
a) an einer Seite des Mantels (10):
- einen ersten, von einer Trennwand (84) in zwei separate Kammern - eine als oberstromige Kammer bezeichnete Kammer (800b), die mit einem Rohrstutzen (80) ausgestattet ist, der an eine Zufuhrleitung des zu erwärmenden Fluids anschließbar ist, die andere als unterstromige Kammer bezeichnete Kammer (801b) - getrennten Sammelbehälter (8b),
- einen zweiten, von einer Trennwand (85) in zwei separate Kammern - eine als oberstromige Kammer bezeichnete Kammer (800a), die andere als unterstromige Kammer bezeichnete Kammer (801a), die mit einem Rohrstutzen (81) ausgestattet ist, der an eine Ableitungsleitung des erwärmten Fluids anschließbar ist - getrennten Sammelbehälter (8a),
wobei die oberstromige (800b, 800a) und die unterstromige (801a, 801b) Kammer miteinander durch einen Rohrstutzen (82, beziehungsweise 83) verbunden sind,
b) auf der anderen Seite des Mantels (10):
- einen dritten Sammelbehälter (9a), der von zwei teilweise durch eine unvollständige Trennwand (91) getrennten Kammern gebildet ist, einer als oberstromige Kammer bezeichneten Kammer (900a), der anderen als unterstromige Kammer bezeichneten Kammer (901a), wobei diese zwei Kammern über einen Durchgang mit begrenztem Querschnitt miteinander kommunizieren können, der sich am Ende der Trennwand (91) befindet,
- einen vierten Sammelbehälter (9b), der von zwei durch eine unvollständige Trennwand (92) getrennten Kammern gebildet ist, einer als oberstromige Kammer bezeichneten Kammer (900b), der anderen als unterstromige Kammer bezeichneten Kammer (901b), wobei diese zwei Kammern über einen Durchgang mit begrenztem Querschnitt miteinander kommunizieren können, der sich am Ende der Trennwand (92) befindet,
wobei die oberstromigen Kammern (900a, 900b) miteinander durch einen Rohrstutzen (90) verbunden sind,
und dass:
- einerseits die N Module, die die sekundäre Wicklung (6) bilden, parallel montiert sind, mit ihrer Eingangsmündung an die oberstromige Kammer (800b) des ersten Sammelbehälters (8b) und mit ihrer Ausgangsmündung an die oberstromige Kammer (900b) des vierten Sammelbehälters (9b) angeschlossen,
- andererseits eine bestimmte Anzahl Nb der Module, die eine (5b) der zwei primären Wicklungen bilden, parallel montiert ist, mit ihrer Eingangsmündung an die oberstromige Kammer (800b) des ersten Sammelbehälters (8b) angeschlossen und mit ihrer Ausgangsmündung an die oberstromige Kammer (900b) des vierten Sammelbehälters (9b) angeschlossen, wogegen der Rest N-Nb der Module, der diese primäre Wicklung (5b) bildet, parallel montiert ist, mit ihrer Eingangsmündung an die unterstromige Kammer (901b) des vierten Sammelbehälters (9b) angeschlossen und mit ihrer Ausgangsmündung an die unterstromige Kammer (801b) des ersten Sammelbehälters (9b) angeschlossen,
- weiterhin eine bestimmte Anzahl Na der Module, die eine andere primäre Wicklung (5a) bilden, parallel montiert ist, mit ihrer Eingangsmündung an die oberstromige Kammer (800a) des zweiten Sammelbehälters (8a) angeschlossen und mit ihrer Ausgangsmündung an die oberstromige Kammer (900a) des dritten Sammelbehälters (9a) angeschlossen, wogegen der Rest N-Na der Module, die diese primäre Wicklung (5a) bildet, parallel montiert ist, mit ihrer Eingangsmündung an die unterstromige Kammer (901a) des dritten Sammelbehälters (9a) angeschlossen und mit ihrer Ausgangsmündung an die unterstromige Kammer (801a) des zweiten Sammelbehälters (8a) angeschlossen.

17. Wärmetauscher nach Anspruch 16, **dadurch gekennzeichnet, dass** die Anzahlen Na und Nb gleich sind.

18. Wärmetauscher nach Anspruch 16, **dadurch gekennzeichnet, dass** N eine gerade Zahl ist und dass Na + Nb = N/2 ist.

19. Wärmetauscher nach Anspruch 16, **dadurch gekennzeichnet, dass** der Rohrstutzen (82), der die oberstromigen Kammern (800b - 800a) des ersten und zweiten Sammelbehälters (8b, 8a) miteinander verbindet und der Rohrstutzen (90), der die oberstromigen Kammern (900a - 900b) des dritten und vierten Sammelbehälters (9a, 9b) miteinander verbindet, jeweils mit einem Schieber (V1 beziehungsweise V2) ausgestattet sind, der verschließbar ist, was erlaubt, vom Kreis einen (5a) der zwei primären Wärmetauscher (5a, 5b) zu isolieren, wenn nur der andere primäre Wärmetauscher (5b) in Betrieb versetzt ist.

20. Gas- oder Ölheizkessel, der einen Wärmetauscher (1) nach mindestens einem der vorangehenden Ansprüche umfasst, der mit einem Paar Brenner (4a, 4b) ausgestattet ist, die jeweils mit einem Kontrollmittel (3a, 3b) ihrer Brennstoffversorgung ausgestattet sind.

21. Heizkesselgruppe, **dadurch gekennzeichnet, dass** sie mindestens zwei Heizkessel nach Anspruch 20 aufweist, die mit einem selben Heizkreis verbunden sind, Kanalisationen (C1) für die Zufuhr von zu erhitzendem Wasser und für die Ableitung (C2) des warmen Wassers umfassend.

## Claims

1. Condensation heat exchanger comprising a pair of primary tubular bundles (5a, 5b), each bundle, surrounding a fuel or gas burner (4a, 4b), and a secondary tubular bundle (6) on which condensation of the water steam contained in the burned gases discharged from the primary bundles occurs, these three bundles (5a, 5b, 6) being mounted parallel, side-by-side inside a gas-tight casing (10), and communicating with one another, means being provided in order to circulate a fluid to be heated in particular cold water, between the tubes forming the secondary bundle (6) and the tubes forming the primary bundles (5a, 5b), said casing (10) having a discharge sleeve (11) for burned gases, **characterized in that** the casing (10) is subdivided at the secondary bundle (6) by a partition (7-70; 7-71, 72) that extends both inside and outside said bundle (6), with the arrangement being such that a only a circumferential section of this last one is able to be contacted and traversed by the hot gases coming from one of the two primary bundle (5a), and the remaining section of the secondary bundle (6) being able to be contacted and traversed only by the hot gases coming from the other primary bundle (5b).

2. Exchanger according to claim 1, **characterized in that** the two primary tubular bundles (5a, 5b) and the secondary tubular bundle (6) are of a generally cylindrical shape, and each consists of a tube, or a group of tubes, and by the fact that the burners (4a, 4b) are cylindrical and housed respectively coaxially inside the primary bundles (5a, 5b), which exchanger being thus arranged so that the hot gases generated by the burner (4a, 4b) pass radially or approximately radially first through said primary bundle (5a, 5b), from the inside to the outside, then through said secondary bundle (6), this time from the outside to the inside, so as to then be discharged from the exchanger through said sleeve (11).

3. Exchanger according to claim 1 or 2, **characterized in that** the axes (A-A'), (B-B') and (C-C') of the three bundles (5a), (5b), and (6) are located in the same plane (Z), and the secondary bundle (6) is arranged between the two primary bundles (5a, 5b).

4. Exchanger according to claim 3, **characterized in that** said partition (7, 70) extends diametrally with respect to the secondary bundle (6), perpendicularly to said plane (Z).

5. Exchanger according to either one of claims 3 or 4, **characterized in that** said plane (Z) is vertical.

6. Exchanger according to any one of the preceding claims, **characterized in that** the three bundles (5a), (5b) and (6) are similar, have the same length and the same diameter.

7. Exchanger according to any one of the preceding claims, **characterized in that** said casing (10) includes a planar façade (100), called a front façade, perpendicular to the axes (A-A'), (B-B') and (C-C') of the three bundles (5a), (5b) and (6), to which said burners (4a, 4b) are attached.

8. Exchanger according to any one of the preceding claims, **characterized in that** it comprises means (3a, 3b) for controlling the supply of each burner (4a, 4b) with fuel.

9. Exchanger according to claim 8, **characterized in that** said control means (3a, 3b) include a closing valve (32), such as a pivoting flap, for preventing or, on the contrary, allowing fuel to be supplied to the associated burner (4a, 4b).

10. Exchanger according to any one of the preceding claims 3, **characterized in that** said casing (10) includes a planar façade (101), called a rear façade, perpendicular to the axes (A-A'), (B-B') and (C-C') of the three bundles (5a), (5b) and (6), which is traversed by an opening (1010) centered on the axis (C-C') of the secondary bundle and is bordered by said sleeve (11).

11. Exchanger according to claim 10, **characterized in that** said partition (7) has, on the side of the rear façade (101), a free edge that is slightly inserted into said opening (1010) and/or into the sleeve (11).

12. Exchanger according to any one of the preceding claims, **characterized in that** said bundles (5a), (5b) and (6) are helical tube windings.

13. Exchanger according to claim 12, **characterized in that** the tubes constituting the helical windings have a planar and/or oval cross-section, of which the major axis is perpendicular to the axis of the winding.

14. Exchanger according to claim 13, **characterized in that** a gap separating two coils of the winding has a width (k) substantially smaller than the width (i) of the tube.

15. Exchanger according to any one of claims 12 to 14, **characterized in that** each tubular winding constituting a bundle (5a), (5b) and (6) is constituted by a series of N identical modules placed end-to-end.

16. Exchanger according to claim 15, **characterized in that** it is equipped with a transfer system for fluid, in particular water, traveling through the exchanger, which includes:
a) on a side of the casing (10):
- a first collection tank (8b) subdivided into two separate chambers by a partition (84), one (800b) called an upstream chamber, provided with an end piece (80) capable of being connected to a conduit for supplying the fluid to be heated, and the other (801b) called a downstream chamber;
- a second collection tank (8a) subdivided into two separate chambers by a partition (85), one (800a) called an upstream chamber, and the other (801a) called a downstream chamber, provided with an end piece (81) capable of being connected to a conduit for discharge of the heated fluid;
wherein said upstream (800b, 800a) and downstream (801a, 801b) chambers are connected to one another by a tubing (82 and 83, respectively);
b) on the opposite side of the casing (10):
- a third collection tank (9a) formed by two chambers partially separated by an incomplete partition (91), one (900a) called an upstream chamber, and the other (901a) called a downstream chamber, which two chambers can communicate with one another through a passage with a limited cross-section located at one end of the partition (91);
- a fourth collection tank (9b) formed by two chambers partially separated by an incomplete partition (92), one (900b) called an upstream chamber, and the other (901b) called a downstream chamber, which two chambers can communicate with one another through a passage with a limited cross-section located at one end of the partition (92);
wherein said upstream chambers (900a, 900b) are connected to one another by a tubing (90);
and:
- first, the N modules forming the secondary bundle (6) are mounted in parallel, with their inlet connected to the upstream chamber (800b) of the first collection tank (8b) and their outlet connected to the upstream chamber (900b) of the fourth collection tank (9b);
- second, a certain number Nb of modules forming one (5b) of the two primary bundles are mounted in parallel, with their inlet connected to the upstream chamber (800b) of the first collection tank (8b) and their outlet connected to the upstream chamber (900b) of the fourth collection tank (9b), while the rest N-Nb of the modules forming this primary bundle (5b) are mounted in parallel, with their inlet connected to the downstream chamber (901b) of the fourth collection chamber (9b) and their outlet connected to the downstream chamber (801b) of the first collection tank (9b);
- third, a certain number Na of modules forming the other primary bundle (5a) are mounted in parallel, with their inlet connected to the upstream chamber (800a) of said second collection tank (8a) and their outlet connected to the upstream chamber (900a) of the third collection tank (9a), while the rest N-Na of the modules forming this primary bundle (5a) are mounted in parallel, with their inlet connected to the downstream chamber (901a) of the third collection chamber (9a) and their outlet connected to the downstream chamber (801a) of the second collection tank (8a).

17. Exchanger according to claim 16, **characterized in that** said numbers Na and Nb are equal.

18. Exchanger according to claim 16, **characterized in that** N is an even number and Na + Nb = N/2.

19. Exchanger according to claim 16, **characterized in that** the tubing (82) that connects the upstream chambers (800b - 800a) of the first and second collection tanks (8b, 8a) together and the tubing (90) that connects the upstream chambers (900a - 900b) of the third and fourth collection tanks (9a, 9b) together are each provided with a valve (V1 and V2, respectively) which can be closed to isolate from the circuit one (5a) of the two primary exchangers (5a, 5b) when only the other primary exchanger (5b) is being operated.

20. Gas or fuel-oil boiler including an exchanger (1) according to at least one of the preceding claims, which is provided with a pair of burners (4a, 4b) each equipped with means (3a, 3b) for controlling the fuel supply.

21. Series boilers, **characterized in that** it comprises at least two boilers according to claim 20, which are connected to the same heating circuit including channels (C1) supplying the fluid to be heated and (C2) sending out the hot fluid.
